Europäisches Patentamt

European Patent Office

Office européen des brevets

(19)

(11) Numéro de publication: **0 211 218**
**A2**

(12) # DEMANDE DE BREVET EUROPEEN

(21) Numéro de dépôt: 86108679.1

(22) Date de dépôt: 25.06.86

(51) Int. Cl.⁴: **B60T 8/52**

Une requête en rectification de quelques omissions sur page 12 a été présenté conformément la règle 88 CBE.Il est statué sur cette requête au cours de la procedure engagée devant la division d'examen (Directives relatives à l'examen pratiqué à l'OEB, A-V, 2.2).

(30) Priorité: 01.07.85 FR 8510127
12.08.85 FR 8512365

(43) Date de publication de la demande:
25.02.87 Bulletin 87/09

(84) Etats contractants désignés:
DE GB IT

(71) Demandeur: **Pons-Léchart, Raphael**
**71, Rue des Fontaines**
**F-31300 Toulouse(FR)**

(72) Inventeur: **Pons-Léchart, Raphael**
**71, Rue des Fontaines**
**F-31300 Toulouse(FR)**

(54) **Dispositif hydraulique, avec systèmes d'appliqation, de variation de freinage assiste en fonction de la mesure de l'adhérence au sol du véhicule.**

(57) Le dispositif **mesure** l'adhérence par le jeu d'une liaison **élastique** entre étriers avant et leurs supports ; l'amplification de ce jeu par transmission hydraulique et pistons différentiels **P1** et **P2** permet d'agir grâce au piston **P3** et à l'axe **AX3** sur l'assistance par énergie pneumatique, électropneumatique ou hydroélectrique ; c'est le ressort **R3** soumis à **P2** par l'intermédiaire de P3 qui assure cette **élasticité** et équilibre la force résultant de la **pression** engendrée par **P1**sous l'effet de la poussée des étriers que provoque l'entrainement de ceux-ci, par le frottement disques -plaquettes et qui correspond à l'effet de l'énergie **cinétique** du véhicule ; cette poussée est limitée par la capacité d'adhérence.

Une variante consiste à utiliser cette énergie, à l'exclusion de toute autre, la **pression** étant appliquée sur la section utile en forme de couronne de P2, et par cette section, sur **R3**, intercalés entre pédale **PL** et maître cylindre **MCY**, la perte d'adhérance entrainant la détente de R3.

FIG.1

FIG.25

# DISPOSITIF HYDRAULIQUE, AVEC SYSTEMES D'APPLICATION DE VARIATION DE FREINAGE ASSISTE EN FONCTION DE LA MESURE DE L'ADHERENCE AU SOL DU VEHIC LE.

L'invention porte sur un dispositif hydraulique, avec procédés d'application, pour adapter l'assistance au freinage à l'adhérence entre sol et roues, afin d'éviter l'instauration du blocage de celles-ci ; cette assistance peut devenir négative.

L'état de la technique consiste, en général, à saisir, à l'aide de palpeurs, la vitesse de rotation de chacune des quatre roues, à détecter les différences de rotations traduisant une instabilité dans l'adhérence et à comparer ces différences à des valeurs prédéterminées et mémorisées pour intervenir sur la pression transmise à chacun des cylindres récepteurs, actionnant plaquettes ou machoires.

Les moyens retenus pour la mise en oeuvre du dispositif présenté et consistant à agir sur l'assistance en fonction de l'adhérence qui avec le poids, le rayon de la roue et le frottement entre disque et plaquettes, crée, par rapport à l'axe de la roue, un moment transformé en pression hydraulique, procèdent des précisions et considérations suivantes :

-freinage par disques sur l'essieu avant ;

-pratiquement, d'un même côté du véhicule, la roue arrière retrouve, au temps près mis pour parcourir la longueur de l'empattement, les mêmes caractéristiques d'adhérence que celles rencontrées par la roue avant ;

-une décélération plus importante provenant d'une, deux ou trois des quatres roues peut enlever la maîtrise de la direction

Ces moyens consistent à :

-monter, pour chaque roue avant, un étrier oscillant

-traduire linéairement l'amplitude et le sens de cette oscillation qui résultant instantanément des variations du moment précité, et donc de l'adhérence, par des variations de pression hydraulique grâce à un piston, à course très réduite, intercalé entre l'étrier et une butée solidaire du porte moyen ou du carter du pont ;

-par le jeu de deux pistons différentiels, dont celui-là, amplifier cette course et réduire cette pression à une valeur facilement équilibrée par un ressort dont les caractéristiques n'impliquent pas de contraintes mécaniques et d'encombrement particulières ; .

-exploiter une telle course pour intervenir sur l'intensité et, éven tuellement, le sens de l'assistance et donc sur la force de freinage au niveau du maître cylindre, sans modification de celui-ci, déjà adopté par le constructeur et en aval duquel les circuits hydrauliques, y compris le répartiteur de pression habituel entre essieux avant et arrière, restent inchangés.

Le jeu de la liaison élastique ainsi créé entre étrier et port moyeu, ou pont, constitue un détecteur des modifications et, ou, perte d'adhérence.

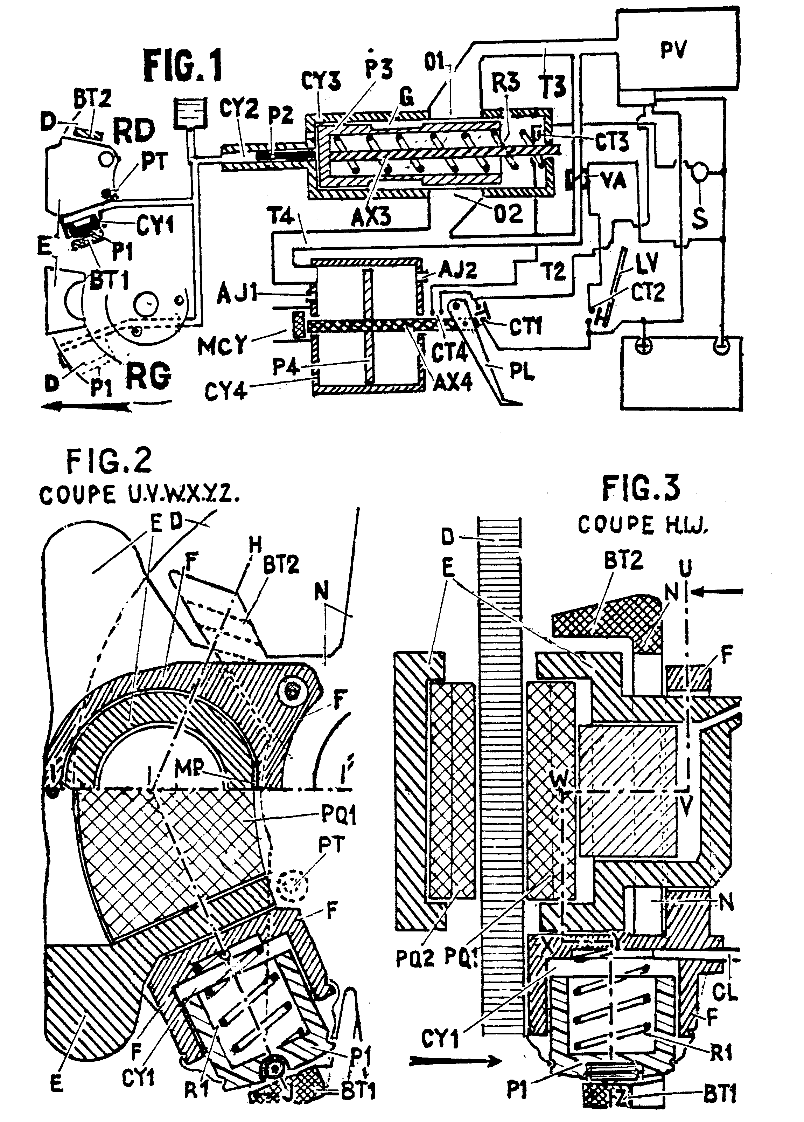

La figure 1 indique l'ensemble du dispositif, la flèche correspondant au sens de la marche avant, les étriers étant situés en avant du moyeu dans le montage présenté ; elle donne le schéma du circuit électrique associé :

-**RD** est la roue droite, côté intérieur, le piston ou la section **P1** transformant en pression hydraulique élevée dans le cylindre **CY1** la poussée de l'étrier **E**, entraîné par le frottement des plaquettes contre le disque **D** et oscillant autour du pivot **PT**.

-**RG** est la roue gauche, côté extérieur et jante enlevée, avec également, en pointillé, **P1** et **CY1**.

-Pour chaque roue avant, **BT1** est la butée de **P1** et **BT2** la butée de **E** dans le cas de marche arrière.

-Les **CY1** sont reliées par les canalisations **CL**, avec éléments souples de raccord, au cylindre **CY2** avec son piston et section **P2**, le rapport **P1/P2 = k**.

-**P2** agit sur le piston **P3**, coulissant dans le cylindre **CY3** contenant le ressort **R3** prévu tel qu'à sa compression maximale, il équilibre la force transmise par **P2** lorsque **P1** est soumis à la poussée maximale possible de **E** ; le rapport entre cette force et cette poussée est **1/k**

-L'axe **AX3** est solidaire de **P3** et agit en fonction du sens de son déplacement sur le contact électrique **CT3**.

-**CY3** présente deux orifices latéraux O1 et O2, constitués par des lumières, de largeur réduite et de longueur comparable à la course de **P3** qui est maximale lorsque la compression de **R3** est au maximum.

-**G** est une gorge aménagée dans **P3** ; sa largeur est également comparable à cette course maximale.

-La tubulure **T3** raccorde **CY3** à une pompe à vide électrique **PV** créant, par dépression atmosphérique, l'énergie nécessaire à l'assistance et constituant une solution dont les variantes sont indiquées plus loin; **T4** raccorde **CY3** au cylindre **CY4**, dans lequel se déplace le piston **P4**, solidaire de l'axe **AX4**, relié à la pédale **PL** et transmettant, après assistance, la force de freinage au niveau du maître cylindre **MCY** ; cet axe agit en fonction du sens de son déplacement sur le contact électrique **CT4**et l'action du conducteur sur la pédale **PL** ferme le contact **CT1** qui met **PV** sous tension, cette tension pouvant momentanément être maintenue, avec relais de temporisation, après ouverture de **CT1** par défreinage, pour éviter, en conduite en ville par exemple, des démarrages et arrêts incessants de cette pompe.

-**S** est un signal lumineux ou sonore mis sous tension lors des fermetures simultanées de **CT3** et **CT4**.

-**AJ1** et **AJ2** sont deux ajutages, ouverts sur l'air ambiant, de calibres calculés pour que la dépression de **PV**, transmise sur **P4**, se module en fonction du dégagement de **O1** et **O2** par **G**, au cours du déplacement de **P3**.

-Le contact **CT2** se ferme lorsque le levier de vitesse est mis en position de marche arrière, tandis que l'électrovanne **VA** met **CY3** et **CY4** en communication directe, le débit étant réduit par la faible section de **T2**, pour assurer une assistance de valeur constante et adaptée à un besoin limité.

Les figures 2, 3 et 4 précisent le montage mécanique au niveau de la roue.

-La pièce **E**, dont la forme dépend du type adopté par le constructeur, constitue l'étrier avec son cylindre récepteur habituel dont le piston actionne les plaquettes **PQ1** et **PQ2** contre **D** ; la pièce **F** , comprenant **CY1** avec **P1**, assure la liaison entre **E** et la pièce **N** qui, solidaire du porte moyeu, constitue les butées **BT1** et **BT2** ; dans le cas de freins à la sortie du pont, **N** est fixée sur le carter de ce pont ou confondue avec celui-ci.

-Ce cylindre récepteur, solidaire de l'étrier, coulisse dans **F** en fonction de l'usure de **PQ2** et le méplat **MP** (fig. 2) l'empêche de jouer autour de son axe sous l'effet de la torsion du raccord flexible de **CL** : par construction, la perpendiculaire aux faces des plaquettes passant par leurs centres de gravité et l'axe de **CY1** se coupent orthogonalement pour éviter la tendance de rotation de **E** autour du contact entre **P1** et **BT1**.

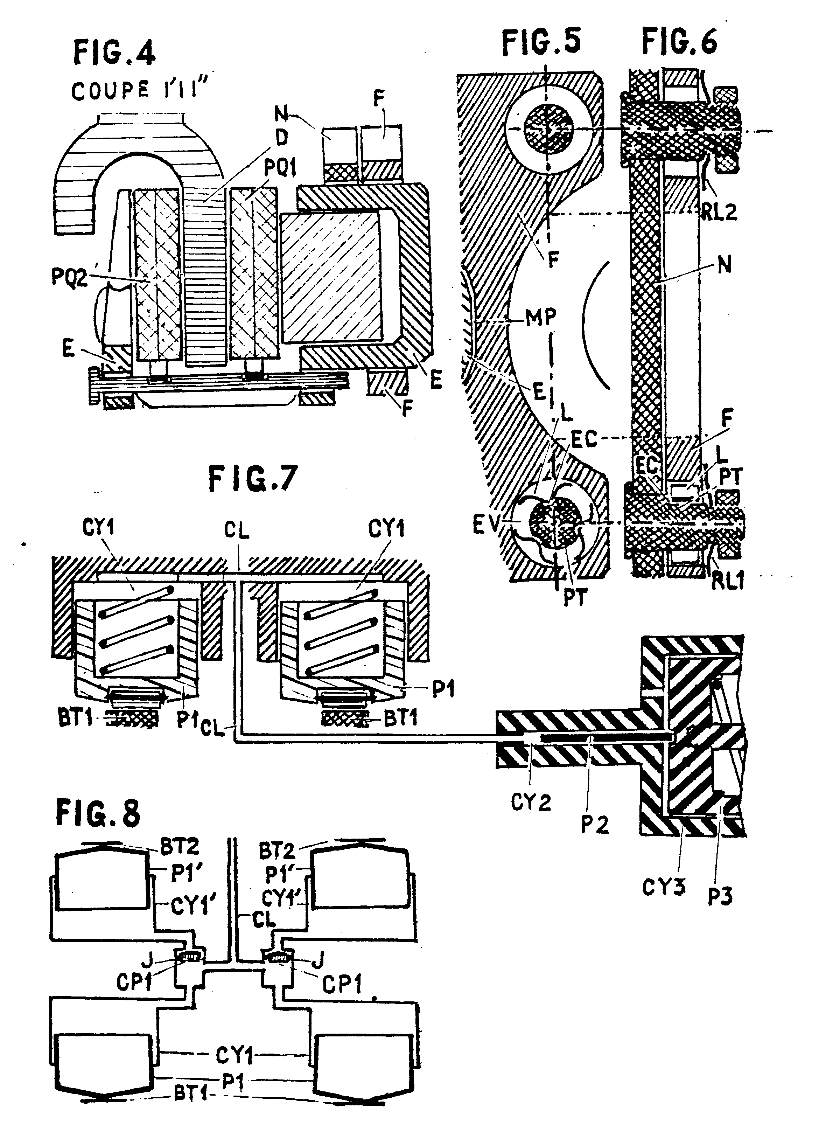

-Les flèches de la figure 3 indiquent les côtés suivant lesquels a été faite la coupe constituant la figure 2.

-Le ressort **R1** assure la position identique de **P1** par rapport à **CY1** sur chacune des deux roues en position repos.

Les figures 5 et 6 donnent le détail du montage de **F** sur **N** , les ressorts en forme de lames **L** étant profilés de manière à se trouver calés dans les encoches **EC** de **PT** solidaire de **N**, chacune des extrémités de ces ressorts appuyant sur la circonférence de l'évidement **EV** de **F** ; ce montage assure le faible jeu à ménager du fait que **E** et **F** sont entraînés par **D**, suivant un arc de cercle minime mais ayant comme axe celui du moyeu et non celui de **PT** ; les rondelles **RL1** et **RL2** maintiennent **F** appliquée contre **N**, en situation de non freinage.

La figure 7 explicite la liaison hydraulique entre les **CY1** et le **CY2**.

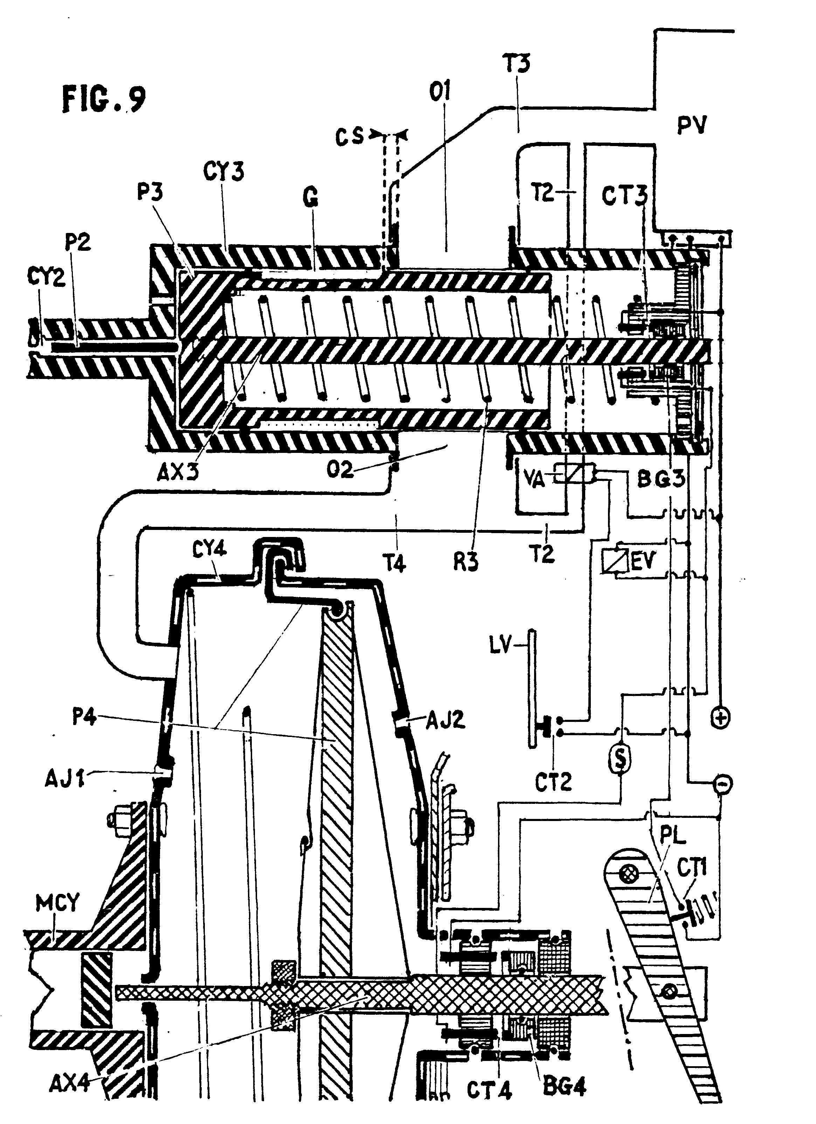

La figure 8 est le schéma de montage d'une variante dans laquelle, pour chaque étrier, **P1'** et **CY'** interviennent lors du freinage en marche arrière ; **CT2**, **T2** et **VA** n'existent alors pas ; les clapets cylindriques **CP1**, maintenus au repos, par montage serré par **J**, sur leur dernière position prise après freinage -défreinage, empêchent le transfert du liquide de **CY1** vers **CY1'**, ou vice-versa, qui s'effectuerait au détriment de l'action sur **P2**. La figure 9 donne, à partir de **P2**, le détail des montages indiqués dans la figure 1 et précise les circuits électriques annexes ; **CS** est la courte partie de course de **P3** au bout de laquelle l'assistance commence à intervenir par début d'ouverture de **O1** et **O2**.

Les éléments des contacts **CT3** et **CT4** sont fixés sur matière diélectrique constituant en particulier les bagues **BG3** et **BG4**, respectivement semi-solidaires, par frottement, des axes **AX3** et **AX4** qui poursuivent leur course lorsque ces bagues arrivent en butée.

Le fonctionnement et les domainesd'application du dispositif font l'objet des exemples et variantes suivants.

Dans la suite du texte :

**FM** = force résultant de la réaction de **BT1** sur **P1** et engendrée par le frottement entre plaquettes et disque et qui est fonction de :

**Mt** = moment résultant de l'adhérence de la roue sur le sol, de la partie du poids du véhicule supportée par cette roue, du rayon de celle-ci, du rayon moyen de la couronne utile de **D** et du frottement résultant du serrage assuré par **PQ1** et **PQ2**

Fp = force transmise par la pédale sur **AX4** à l'initiative du conducteur

**FA** = force d'assistance

**FT** = force totale de freinage transmise au niveau de **MCY**

**FT** = Fp + **FA**

**SA** = Section d'ouverture de **O1** et **O2** selon déplacement de **G**

**SA** = section d'ouverture de **O1** et **O2** par **G** en fonction de la course de **P3**

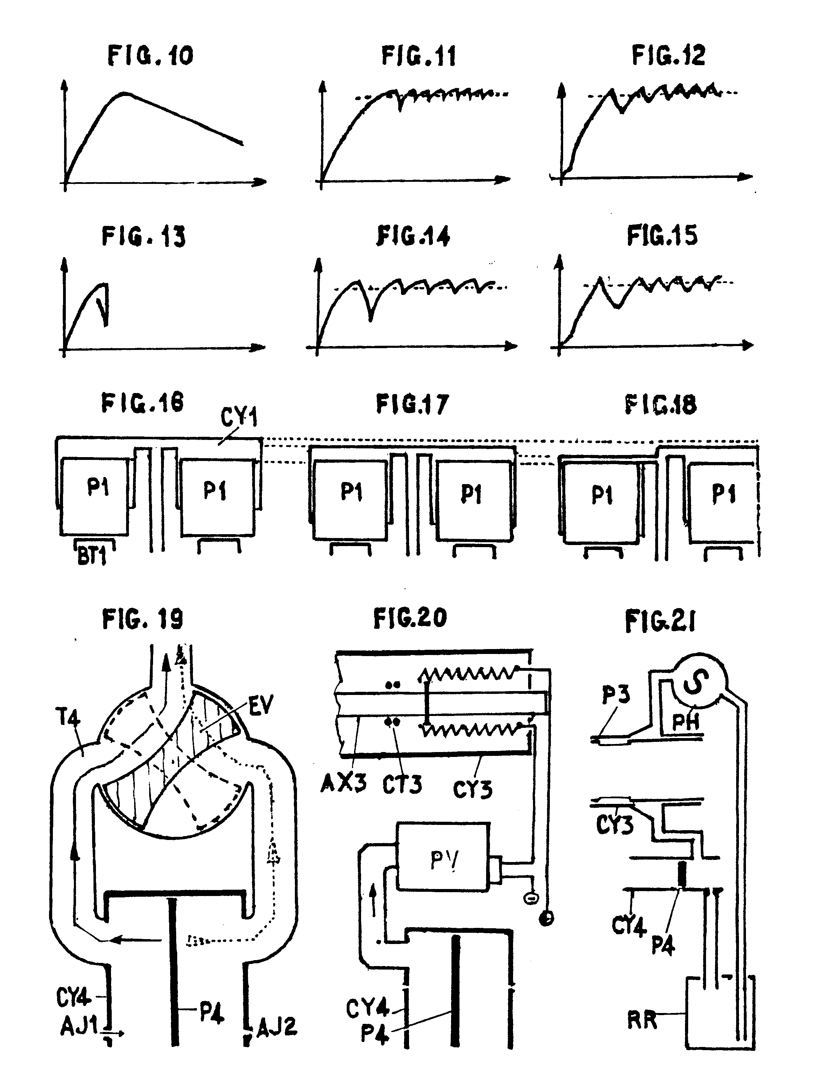

EXEMPLE I -Le véhicule circule normalement et les positions identiques des **P1** dans **CY1** sont - schématiquement indiquées par la figure 16 ; les effets dynamiques sur les **E**, dûs aux inégalités de la chaussée, peuvent engendrer une faible **FM**, entraînant un déplacement de **P3** , mais **CT1** restant ouvert, **PV** ne démarre pas ; de même **CS** est calculé pour neutraliser la conséquence de ces effets lorsque **PV** reste momentanément sous tension par temporisation ou dans les cas de variantes II et III.

EXEMPLE II -Le freinage intervient sans perte d'adhérence ; les positions relatives des **P1** dans les **CY1** sont indiquées par la figure 17.

Fp provoque successivement mais quasi-instantanément :

-la fermeture de **CT1** avec démarrage de **PV** ;

-la fermeture de **CT4**, **CT3** étant encore fermé ;

-le début de mise en pression dans **MCY** et le commencement de serrage de **D** par **PQ1** et **PQ2** ; le moment de **FM** , par rapport aux centres de gravité de celles-ci, reste toujours inférieur au moment du double de la force que transmet le piston du cylindre récepteur de **E**, affectée du coefficient de frottement entre **D** et **PQ1** et **PQ2**, par rapport au contact **P1** -**BT1**, le bras de levier du second étant, dans ce but, prévu par construction suffisamment élevé ;

-l'entraînement de **E** par **D** provoquant le déplacement de **P3** ;

-sous la croissance de **Fp**, ce déplacement devenant supérieur à **CS**, début et poursuite du dégagement de **O1** et **O2** par **G** ;

-apparition par dépression de **FA** dont la valeur s'élève avec la croissance de la différence entre **SA** qui augmente et la section constante de **AJ1** ;

-action de **FA** sur la face adéquate de **P4**, **AJ2** maintenant la pression atmosphérique sur l'autre face de **P4**, **AX4** transmettant **FT** dans **MCY**;

-sous cette action, croissance de **FT** entraînant celle de **FM** qui, à son tour, accroît **FA** et ainsi de suite, tant que **Fp** augmente ; **FT** = **FA** + **Fp** cesse de croître avec **Fp** et diminue et s'annule avec celle-ci lors de défreinage, à l'inverse du processus de freinage.

Parallèlement, **P1** glisse très légèrement sur **BT1**,

-**CT4**, sous l'action de **AX4**, s'est fermé,

-**CT3** reste fermé jusqu'au début du déplacement de **P3** et **AX3** et **S** intervient très momentanément ; **CT3** s'ouvre,

-**CT3** se referme au défreinage mais **CT4** s'ouvre et **S** n'est pas mis sous tension.

EXEMPLE III -L'effort de freinage s'avère incompatible avec la capacité d'adhérence entre la roue et le sol dont les caractéristiques de la surface restent cependant identiques, pendant la durée du freinage, sur toute la largeur du véhicule et donc au niveau des deux roues avant, que cette surface soit sèche ou déjà rendue uniformément plus ou moins glissante.

Le schéma, figure 17, reste valable dans son principe.

Lorsque le glissement entre roue et chaussée atteint une valeur déclenchant l'instabilité de l'adhérence, **Mt** a atteint son maximum ; de même pour le déplacement de **P1**, **P2** et **P3** et pour **SA**.

-Successivement et quasi-instantanément :

-**FA** ne croît plus, de même **FT** ;

-si, par réflexe, le conducteur accroît **Fp** et donc **FT**, cette instabilité persiste en provoquant une baisse de **Mt** et de **FM** dont découlent instantanément : un recul de **P1**, **P2** et **P3**, avec fermeture de **CT3**, une diminution de **SA**, de **FA**, de **FT** et donc du glissement roue-chaussée avec retour à une meilleure adhérence et à un meilleur freinage qui, de nouveau, entraîne une augmentation de **Mt** et **FA** et donc de **FT**, avec nouvelle élévation du glissement et nouvelle baisse de **FA** et ainsi de suite.

Les figures 10, 11 et 12 représentent respectivement les courbes de l'adhérence en fonction du glissement, de l'adhérence en fonction du temps et de **FT** en fonction du temps ; cette dernière évolue entre deux valeurs maximale et minimale, très proches de la valeur optimale indiquée en pointillés, du fait de l'interaction permanente entre **FA** et **Fp** ;

il en résulte des pulsions ressenties par le pied du conducteur qui, par son effort, maintient **CT4** fermé, ces pulsions entraînant ouvertures et fermetures successives de **CT3**, provoquant le fonctionnement discontinu de **S**.

**EXEMPLE IV** -Les caractéristiques de la surface du sol changent en course de freinage, au moins sur toute la largeur du véhicule ; **RD** et **RG** sont également concernées ; la figure 17 reste valable dans son principe; les **P1** ont le même mouvement de recul par rapport aux **CY1**, recul qui entraîne celui, amplifié, de **P2** et **P3** : référence aux figures 13, 14 et 15 dont les courbes correspondent aux mêmes paramètres que ceux retenus dans les figures 10, 11 et 12.

**EXEMPLE V** -Le changement des caractéristiques de la surface du sol ne concernce qu'un seul côté du véhicule et la capacité d'adhérence se ré duit, par exemple au niveau de **RD** ; les positions relatives des **P1** sont indiquées par la figure 18 : **P1** gauche bute sur le fond de son **CY1** et la pression hydraulique dans le dispositif s'établit par le seul effet sur **P1** droit en fonction du **Mt** droit réduit ; pour le reste du processus, les conditions de l'exemple IV se retrouvent, l'égalité de décélération à droite et à gauche, à partir de **FT** au niveau de **MCY**, permettant au conducteur de conserver la maîtrise de la direction.

Cas identique lors de freinage dans une courbe : la roue avant la moins chargée, limitant **FT** afin de conserver cette maîtrise.

Des variantes dans les procédés d'application, dont certaines permettent d'accroître l'efficacité du dispositif, sont :

**VARIANTE I** -En marche arrière, le dispositif est semblable à celui retenu pour la marche avant au niveau des **P1** et **CY1** (Fig. 8). **CT2**, **T2** et **VA** n'existent pas. La pression hydraulique engendrée dans les **CY1'** par les **P1'** amène les **CP1** à obturer les passages vers les **CY1**, cette pression se transmettant normalement sur **P2** et assurant le fonctionnement dans les mêmes conditions, défreinage compris, que celles énoncées dans les exemples précédents. Le freinage en marche avant ramène les **CP1** dans la position assurant le transfert de pression depuis les **CY1** sur **P2**.

**VARIANTE II** - **PV** n'est pas électrique mais entraîné en permanence, comme l'alternateur par exemple ; **CT1** n'existe pas ; la dépression permanente n'est transmise dans **CY4** que par le déplacement de **P3** supérieur à **CS** pour ouvrir **O1** et **O2** sous le premier effet de **Fp** ; l'existence de **CS** au niveau de **CY3** et **P3** (Fig. 9) élimine les effets dynamiques évoqués dans l'exemple I.

**VARIANTE III** -La dépression est assurée sans **PV**, à partir de la pipe d'admission du moteur ; **CT1** n'existe pas ; opportunité de l'ouverture de **O1** et **O2** en fin de **CS** ; l'entrée d'air extérieur par **AJ1**, perturbant la carburation, impose un système d'instillation adéquate de carburant dans cette admission.

**VARIANTE IV** -L'action du dispositif est accentuée par l'inversion de la dépression et de la pression atmosphérique sur les faces de **P4** ; les fermetures simultanées de **CT3** et **CT4** actionnent la seule électrovanne nécessaire **EV** (Fig. 19) : en pointillé, le sens de circulation de l'air et la position de la vanne sous l'effet de ces fermetures ; valable pour les variantes II et III : conséquence sur la carburation d'entrée d'air frais dans l'admission indiquée dans la variante précédente.

**VARIANTE V** -A **PV** est substituée une pompe à surpression **PS** ; le fonctionnement implique le montage de **T4** dans l'autre compartiment de **CY4**. Possibilité d'appliquer la variante IV.

**VARIANTE VI**-L'intensité de la dépression ou de la surpression atmosphérique ne dépend pas de **SA**, ce qui entraîne la suppression de **G**, **O1** et **O2**, **T3** et **T4** étant confondus, mais de la vitesse de **PV** ou **PS** utilisée dans les limites de sa courbe d'efficacité, cette vitesse dépendant du potentiomètre fixé en bout de l'axe **AX3** (Fig. 20) et agissant en fonction du déplacement de cet axe ; possibilité d'appliquer les variantes IV et V.

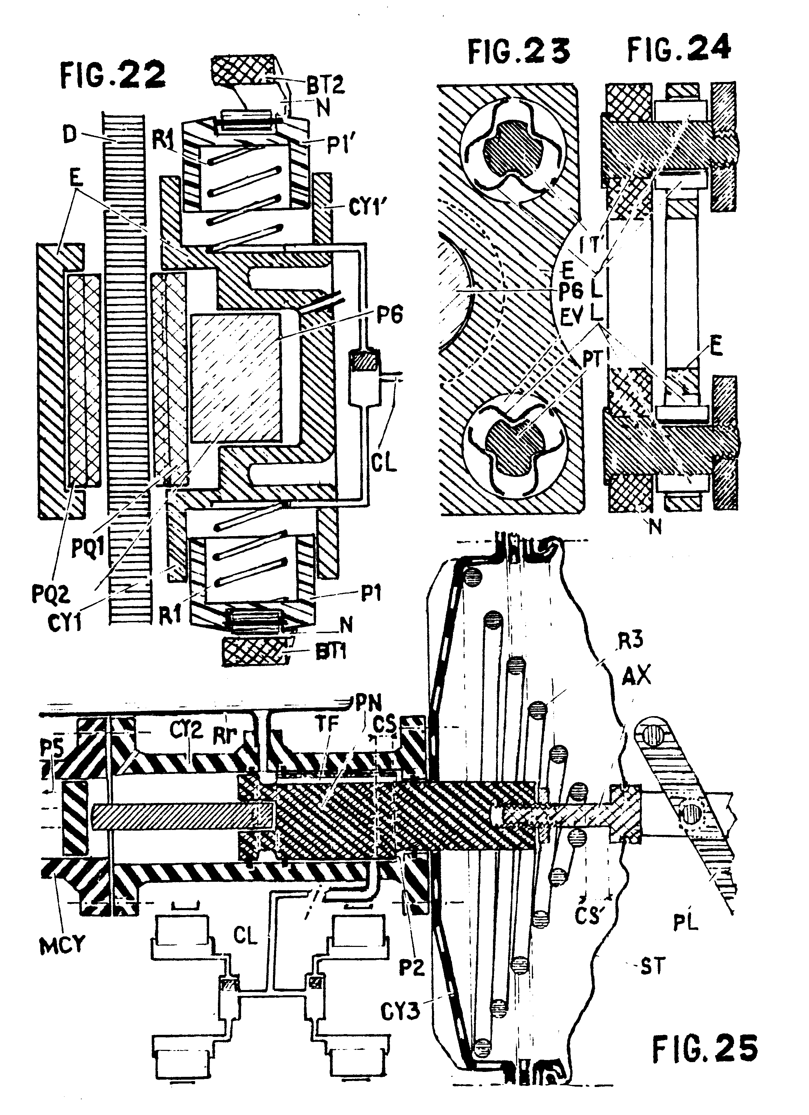

**VARIANTE VII** -(Fig. 21) **PS** est remplacée par une pompe hydraulique **PH** spéciale ou déjà existante sur le véhicule, disposant d'une centrale hydraulique pour diverses fonctions : **RR** est le réservoir de liquide ; la pression utilisée étant plus importante et le fluide pratiquement incompressible, les éléments **G**, **O1**, **O2**, **CY4** et **P4** sont de dimensions et d'encombrement très réduits ; les formes de **G**, **O1** et **O2**, la course de **P3**, la section de **P2** et les caractéristiques de **R3** sont modifiées en conséquence. La variante IV reste applicable ; dans la variante VI, le potentiomètre peut régler la vitesse de **PV**, **PS** ou **PH** par l'intermédiaire d'un relais électrique ou électronique.

**VARIANTE VIII** -Le potentiomètre prévu en variante VI est remplacé par un boitier électronique soumis au déplacement de **AX3**et à**CT3**, agissant respectivement sur des condensateurs à capacités variables et des diodes et transistors.

**VARIANTE IX** Sa particularité est, d'une part, de ne pas faire appel à une énergie pneumatique ou hydraulique préexistante sur le véhicule ou spécialement créée et, d'autre part, par conséquent, d'éviter tout système intermédiaire s'imposant pour canaliser, distribuer et moduler cette énergie

Il s'agit d'utiliser l'énergie (1) provoquant de la poussée de l'étrier et destinée, une partie à l'assistance, et l'autre partie à la compression d'un ressort dont la détente rend disponible cette autre partie utilisable dans le cas d'insuffisance de l'adhérence ; il en résulte que le dispositif assure par lui-même l'assistance qui ne nécessite plus l'installation d'un appareillage particulier, pneumatique ou hydraulique.

Les figures 22, 23, 24 traduisent l'adaptation à cette variante IX des figures initiales 2, 3, 5, 6 et 8, étant indiqué que :

-la variante I, concernant le freinage en marche arrière, est adoptée, dans le montage retenu, pour assurer l'assitance. (1) cinetique

-sans être une conséquence de la variante IX, mais pour un montage plus simple, dans l'ensemble **E** sont aménagés les **CY1** et **CY1'** avec leurs **P1** et **P1'** ; la pièce intermédiaire **F** devient sans objet mais l'usure de **PQ2** entraîne un glissement de **E** sur les **L** nécessairement élargis.

L'utilisation de l'énergie provenant de la poussée de **E** et donc de la poussée hydraulique ainsi engendrée implique une augmentation de **P2**, entraînant celle du volume balayé par celui-ci ; le rapport **k** (ligne 23, page 2 devient moins important et les courses des **P1** s'en trouvent moins réduites ; il en résulte un jeu (lignes 6, 7 et 8 -page 4 -accru qui, avec l'élargissement des **L** et le rôle de guidage de ces derniers pour **E**, entraîne en **PT'** un montage semblable à **PT**.

La figure 25 traduit l'adaptation des figures 7, 8 et 9 ; la section utile de **P2** est la couronne résultant de la forme de **PN** circulant dans **CY2** ; au repos, **PN** obture l'arrivée de **CL** et avec **CS** neutralise les effets dynamiques (exemple I -absence de freinage); **CS'**, de l'axe **AX4** évite au conducteur d'avoir à compresser **R3** tant que, du fait de **CS**, l'assistance n'est pas encore entrée en jeu ; **TF** assure le transfert de liquide avec le réservoir **Rr** pendant le déplacement **CS** pour prévenir le blocage de **PN** sur cette portion de course ; **P5** est la section utile totale du ou des pistons qui engendrent, dans le **MCY**, la pression à laquelle sont soumis les **P6** avant, quel que soit le type de liaison hydraulique entre ce maître-cylindre et les **E**, adopté par le constructeur du véhicule ; **CY3** devient le carter de **R3** ; **ST** est un soufflet de protection.

**P6** est la section du piston (fig. 1 et 2) actionnant **PQ1** et **PQ2**.

En reprenant **FM, Fp, FA, FT**, (page 4) f ———— étant le coefficient de frottement entre **D** et **PQ1** - **PQ2**, **CF** le coefficient à appliquer à **FT** pour obtenir la valeur de celle-ci s'appliquant, par construction dans le cas de pistons multiples dans **MCY**, à ceux de ces pistons engendrant la pression transmise aux **P6**, et en retenant pour **R3** des caractéristiques telles que la compression de celui-ci absorbe la moitié de la force s'appliquant sur **P2**, on obtient approximativement, l'effet des **R1** restant négligeable :

$$FA \neq\neq \frac{CF \times FT \times P6 \times 2f \times P2}{P5 \times P1} - \frac{CF \times FT \times P6 \times f \times P2}{P5 \times P1} \neq\neq \frac{CF \times FT \times P6 \times f \times P2}{P5 \times P1}$$

$$FT \neq\neq Fp + FA \neq\neq Fp + CF \times FT \frac{P6 \times f \times P2}{P5 \times P1}$$

$$FT \left(1 - \frac{CF \times P6 \times f \times P2}{P5 \times P1}\right) \neq\neq Fp \quad \text{ou} \quad FT = Fp \frac{P1 \times P5}{P5 \times P1 - CF \times P6 \times f \times P2}$$

Il faut que, par construction CF x P6 x f x P2 reste inférieur à P5 x P1, avec f à sa valeur maximum;

$$FA = Fp \frac{CF \times P6 \times f \times P2}{P5 \times P1 - CF \times P6 \times f \times P2}$$

est fonction de Fp.

L'explication du fonctionnement du dispositif reste justiciable des exemples des pages 5, 6, 7 --- ------; l'insuffisance progressive ou brusque de l'adhérence, en diminuant **FM**, entraîne l'arrêt de l'accroissement et la chute de la pression sur **P2** et donc celle de **FA** ; simultanément, la détente de **R3** s'oppose à l'effort de freinage du conducteur : référence à l'exemple III.

## Revendications

1 -L'objet de l'invention est l'adaptation de la force de freinage à la capacité d'adhérence au sol d'un véhicule.

Cette adaptation est obtenue par un dispositif consistant à moduler cette force par variation de l'assistance en fonction de la valeur et de l'évolution de cette adhérence dont la mesure est donnée en permanence par l'importance de la compression ou de la détente d'une liaison élastique entre l'étrier et son support.

2 -Procédé selon revendication 1, caractérisé par la liaison élastique constituée, d'une part, au moyen d'un volume constant de liquide compris entre les pistons **P1**, ou **P1'** en variante I, calés sur les butées **BT1** ou **BT2**, et **P2**, et, d'autre part, d'un ressort **R3** dont la compression ou la détente équilibre la force que transmet **P3**, au contact de **P2**.

3 -Procédé selon revendications 1 et 2 que caractérisent, grâce aux pistons différentiels **P1**, ou **P1'** en variante I, et **P2**, d'une part, la transformation du très faible déplacement des **P1**, ou **P1'** en variante I, soumis à l'importante force qu'engendre la poussée de **E**, en un déplacement linéaire amplifié de **P2** et **P3** et, d'autre part, la réduction de cette force à une faible valeur compensée par l'action de **R3**.

4 - Procédé, selon revendications 1, 2 et 3, caractérisé par la reconnaissance permanente, pendant le freinage, en fonction de l'amplitude et du sens du déplacement de **P3** avec son axe **AX3** et avec **CT3**, de l'intensité et de l'évolution de l'adhérence.

5 -Procédé, selon revendications 1, 2, 3, 4 caractérisé par l'exploitation, ainsi que dans les variantes II, III, IV, V et VII, du déplacement de **P3**

et du sens de ce déplacement pour, d'une part, faire dépendre, en agissant sur la section de passage **SA**, **AJ1** et **AJ2** restant constants, l'intensité de l'assistance par dépression ou surpression atmosphérique, oupar pression hydraulique, de l'effort du conducteur et de la capacité d'adhérence et, d'autre part, ouvrir ou fermer le contact **CT3** pour créer, avec **CT4**, un signal.

6 -Procédé, selon revendications 3 et 4 - (variante VI), caractérisé par l'exploitation du déplacement de **AX3** pour commander un potentiomètre faisant varier la vitesse de **PV**, **PS** ou **PH**, et donc la pression ou dépression, pour agir sur **P4**, **CT3** intervenant comme en revendication 5.

7 -Procédé, selon revendication 5, caractérisé par le fait que les fermetures momentanément simultanées de **CT3**, par recul de **AX3** consécutif à la diminution d'adhérence, et de **CT4** sous l'effort du conducteur (Exemple III), provoquent sur **EV** - (variante IV) des impulsions successives dont chacune donne un sens négatif à l'assistance.

8 -Procédé, selon revendication 6, caractérisé par la substitution au potentiomètre (variante VI) d'un boitier électronique comprenant, en particulier, une capacité variant sous l'effet du déplacement de **AX3** et une diode soumise à **CT3**, l'ensemble de ce boitier réglant l'intensité des pressions ou dépression et la face de leur application sur **P4**(variante VIII)

d'adaptation de la force de freinage à la capacité d'adhérence au sol d'un véhicule, selon les revendications 1 à 3 du brevet principal, caractérisé en ce que la pression engendrée par le piston **P1** , sous la poussée des étriers **E**, est exploitée, par son application sur le piston **P2** intercalé entre le maître cylindre **MCY** et la pédale **PL**, pour, simultanément, créer la force d'assistance **FA** et la force de compression du ressort **R3**.

selon revendication 1, caractérisé en ce que chaque excès de glissement entre roue et sol entraîne, par baisse concomitante de l'adhérence, la diminution ou la disparition de **FA** et la détente de **R3** qui, simultanément cumulées, provoquent, durant ce glissement excessif, la réduction de la force de freinage appliquée au niveau du **MCY**.

0 211 218

FIG.1

FIG.2
COUPE U.V.W.X.Y.Z.

FIG.3
COUPE H.I.J.

0 211 218

FIG.4
COUPE I'11"

FIG.5   FIG.6

FIG.7

FIG.8

FIG.9

FIG. 10

FIG. 11

FIG. 12

FIG. 13

FIG. 14

FIG. 15

FIG. 16

CY1

P1    P1

BT1

FIG. 17

P1    P1

FIG. 18

P1    P1

FIG. 19

T4

EV

CY4
AJ1

P4

AJ2

FIG. 20

AX3   CT3    CY3

PV

CY4
P4

FIG. 21

P3

PH

CY3

CY4   P4

RR

FIG.22

FIG.23    FIG.24

FIG.25

Demande de Brevet n°

86 108679 -1

EP/... 
... 
Reçu

1 4 JUIL. 1986

TITRE:-

DISPOSITIF HYDRAULIQUE, AVEC SYSTEMES D'APPLICATION, DE VARIATION DE FREINAGE ASSISTE EN FONCTION DE LA MESURE DE L'ADHERENCE AU SOL DU VEHICULE.

Description - Revendications - PAGE 12

Ci-joint 3 exemplaires de CETTE PAGE à substituer à celle incluse dans le dossier (reçu le 25.06.86 par l'Office) POUR :-

- Pallier l'omission des numéros 9 et 10 des revendications correspondantes et du terme "Procédé".
- Supprimer, à la ligne 10, l'expression: "du brevet principal"

Toulouse le 4.7.86

PONS-LECHART.